# EUROPEAN PATENT SPECIFICATION

(11) **EP 2 468 591 B1**
(45) Date of publication and mention of the grant of the patent: **07.01.2015**
(21) Application number: 11188688.3
(22) Date of filing: 10.11.2011
(51) Int. Cl.: B60T 7/10, B60T 11/08

(54) **Lever mechanism for use on a vehicle**
Hebemechanismus zur Verwendung in einem Fahrzeug
Mécanisme de levier à utiliser sur un véhicule

(30) Priority: 23.12.2010 GB 201021927
(43) Date of publication of application: 27.06.2012
(73) Proprietor: AGCO International GmbH, 8212 Neuhausen am Rheinfall (CH)
(72) Inventor: Brugger, Klaus, 87616 Marktoberdorf (DE)
(74) Representative: Smith, Louise Marie

(56) References cited:
- DE-A1- 2 645 982
- FR-A1- 2 333 294
- FR-A1- 2 893 897
- US-A- 5 448 928

## Description

This invention relates to a lever arrangement having a variable ratio for use on a vehicle. More specifically the invention relates to a park brake on an agricultural machine having a variable ratio.

Lever mechanisms, such as park brake lever mechanisms used on agricultural tractors, comprise a hand lever connected to a movement plate which is connectable to an actuation means, for example, a brake cable. As the plate is moved so a force is exerted on the cable which actuates the brake discs. The lever is manually operable by a driver lifting or lowering the lever. The force applied to the brake discs is dependent upon the lever ratio, that is the ratio of the force applied to the hand lever to the force applied to the brake cable.

The brake discs in some agricultural machines, such as agricultural tractors are positioned in an oil sump. As the brake discs move through the oil there is resistance to the movement of the discs, known as churning losses. To reduce the churning losses, the distance between brake discs can be increased. This however leads to the problem that the brake discs must be moved further if they are to be brought together (to decrease the speed of the tractor). This impacts on the driver being able to control movement of the brake discs by use of the hand lever.

A standard brake lever has a relatively constant, but high lever ratio. Therefore, if a standard brake lever is used in tractors fitted with widely spaced brake discs, the driver would have to perform a huge lever movement. If, however the lever ratio is decreased, the force required on the lever would be too high for a driver's arm.

It is an aim of the invention to overcome the problems set out above by providing a park brake lever mechanism for use on a vehicle wherein the ratio of the force applied to the hand lever to the force applied to the brake cable can be varied. A state of the art variable ratio lever arrangement is known from FR2893897 A1.

According to the invention there is provided a lever arrangement for use on an agricultural machine, said lever arrangement comprising a movement plate connectable to an actuation means, the movement plate provided with guidance means for movement within a guidance track and said plate moveable by means of a lever, wherein movement of the lever in one plane results in a first movement of the plate followed by a second movement of the plate, said first movement being a linear or rotational movement of the plate and said second movement being a rotational or linear movement of the plate different from the first movement.

Preferred features of the invention are set out in the dependent claims.

The invention will now be described, by way of example only with reference to the following drawings in which:
Figures 1 to 4 are side views of a park brake in accordance with the invention,
Figure 5 is a partial side view of a park brake in accordance with the invention,
Figure 6 is a perspective view of a park brake in accordance with the invention, and
Figure 7 is a sectional view along line A-A of Figure 5.

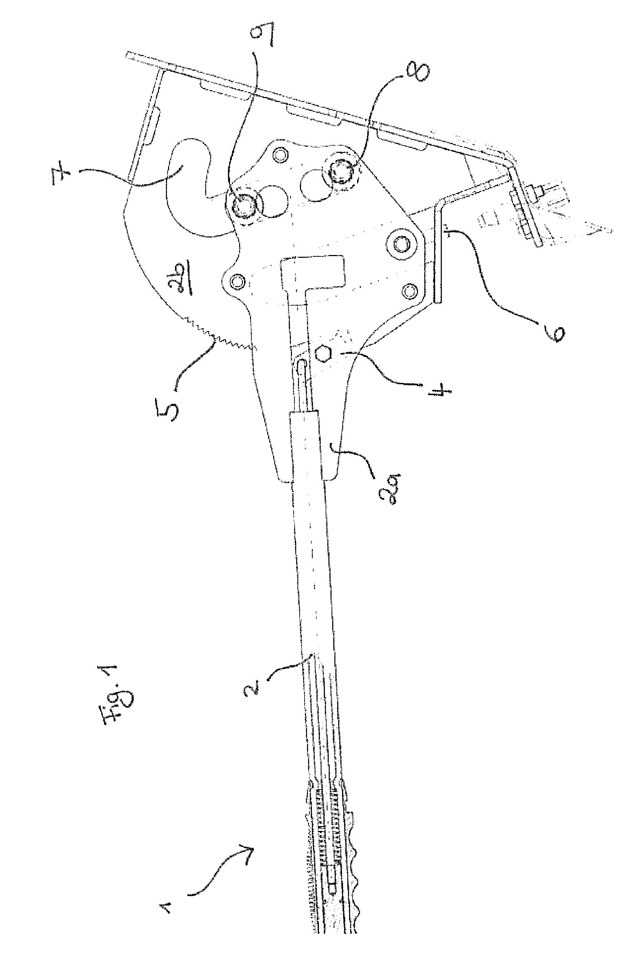

Figures 1 to 4 are side views of a park brake 1 in accordance with the invention. The park brake is suitable for use on an agricultural vehicle, such as an agricultural tractor. The same reference numerals are used for the same features in all the figures.

Park brake 1 comprises a park brake lever 2 connected to two symmetrical movement plates 2a. Movement plates 2a are provided with a cable pull connection 6 for connection to a brake cable (not shown).

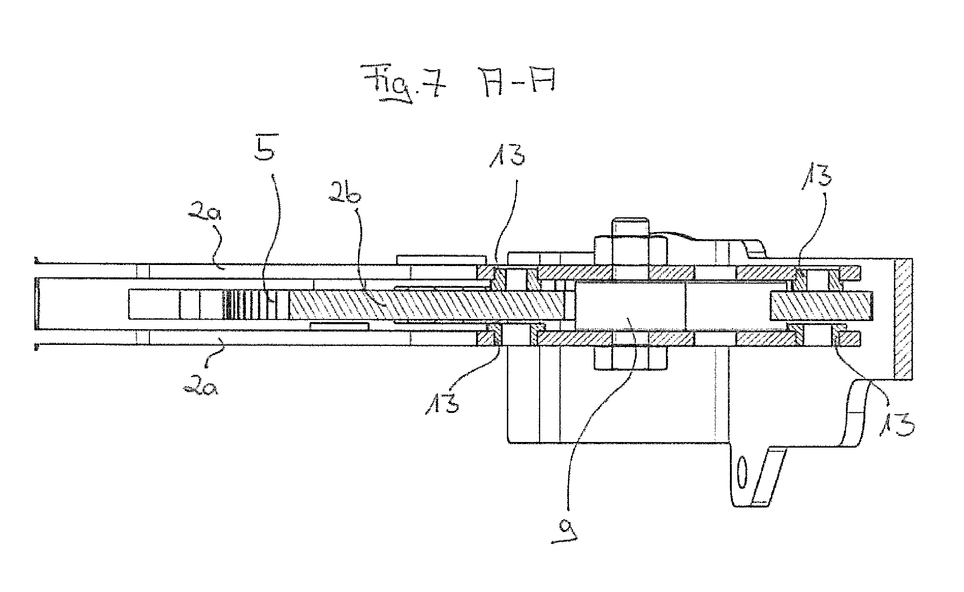

Movement plates 2a are provided with guidance means 8, 9 comprising two ball casters rotatable about a fixed shaft for mounting the plates 2a within a guidance track 7 on a mounting block 2b. The ball casters are attached to the plate 2a in a spaced apart arrangement as better shown in figure 7. Guidance track 7 comprises an aperture having a linear portion 11 I and a curved portion 10. By linear portion 11 it is meant a straight, or substantially straight portion.

Brake lever 2 is provided with an actuator 3 which comprises a spring means. Movement plate 2a is provided with a pawl 4 which can engage with a ratchet 5 on mounting block 2b.

Figure 1 shows the park brake 1 in a non engaged position, that is the brake discs are not in contact. The brake lever 2 is more or less in a horizontal plane and the bottom ball caster 8 is in contact with the bottom of the linear portion of guidance track 7.

To apply the park brake 1, the driver pulls lever 2 in a vertical plane. Ball casters 8 and 9 move upwards in the linear portion of guidance track 7. Movement of the ball casters 8 and 9 in the linear portion 11 of the guidance track 7 means that the lever 2 and plates 2a also move linearly, that is lever 2 and plates 2a move vertically upwards. Movement of the plate upwards means that a brake cable (not shown) attached to cable pull connection 6 is pulled. The ratio of the force applied by the driver on the lever to the force applied to the cable whilst the ball casters are moving within the linear portion of the guidance track 7 is one. That is, the force applied to the cable equals the force applied to the lever 2. This movement is designed to close the gap of widely spaced brake discs as quickly as possible. When the upper ball caster 9 is moving within the curved portion of the guidance track 7, the driver need only move the lever 2 a small distance to apply a large force to the cable.

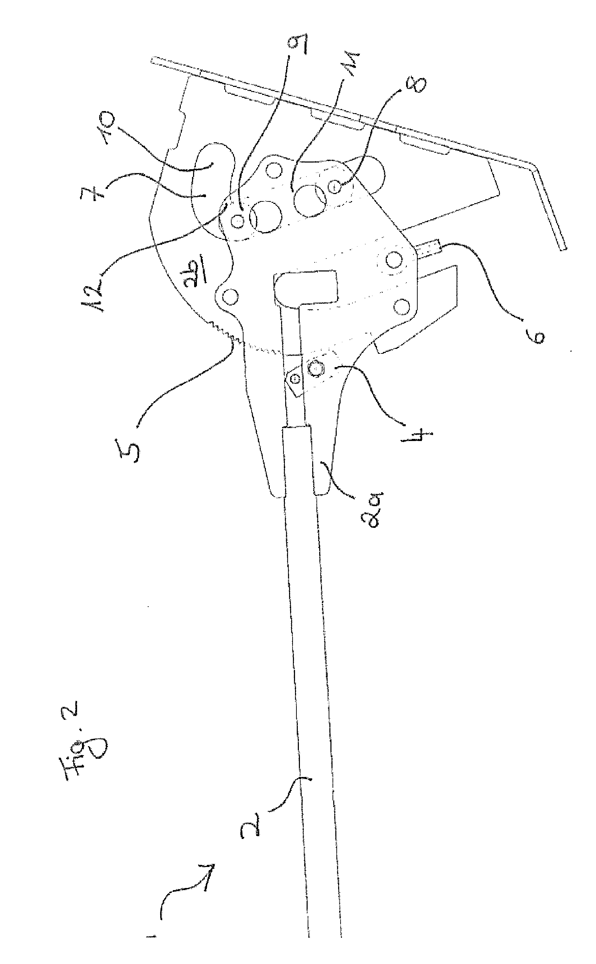

In figure 2, lever 2 and plates 2a have moved upwards. Since ball casters 8, 9 are still in the linear portion 11 of the guidance track 7, the movement of lever 2 and plates 2a is also linear. The ratio of the force applied by the driver on the lever to the force applied to the cable is one. This movement closes the gap between the brake discs.

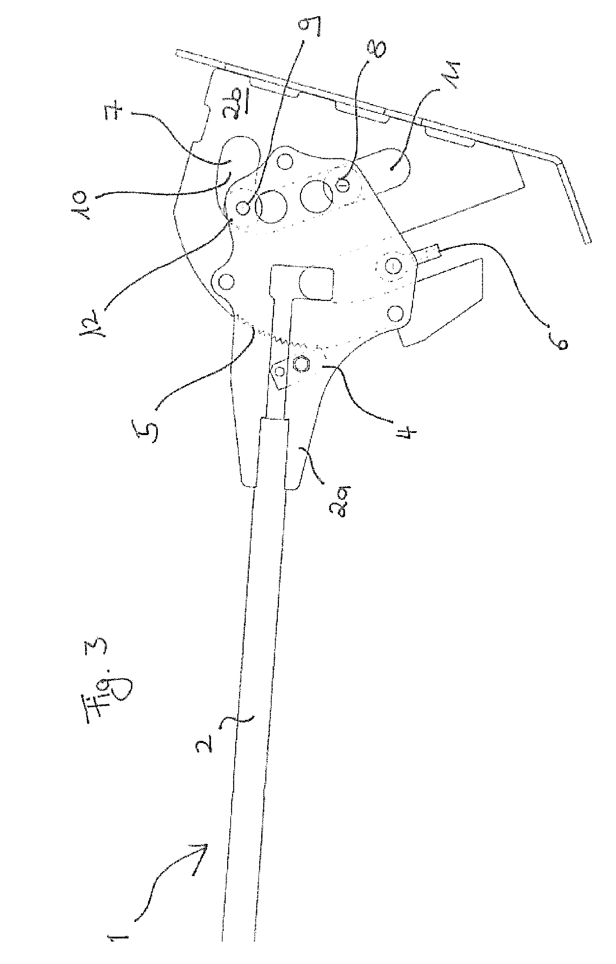

In figure 3, pawl 4 has come into contact with ratchet 5 preventing lever 2 moving downwards. If pawl 4 reaches ratchet 5 the brake discs come into contact and the driver will hear and/or feel the rattling between pawl 4 and ratchet 5 and the resistance when the brake discs come into contact. The pawl only engages with ratchet 5 after ball caster 8 has passed linear portion 11 of guidance track 7. This avoids the driver thinking that the brakes are engaged when they are not. If the driver wants to release the brake he must operate the actuator 3. By acting the actuator 3 the pawl 4 is released from the ratchet 5 and the lever 2 can be moved downwards if the hand brake is not needed. Ball caster 9 is in area 12, an area between linear portion 11 and curved portion 10 of the guidance track 7. The ratio of the force applied by the driver on the lever 2 to the force applied to the cable is now increasing to a value between 1 and 7.3 since the lever 2 and plates 2a will now start to rotate and pivot about ball caster 8. In figure 3, the brake discs are coming into contact.

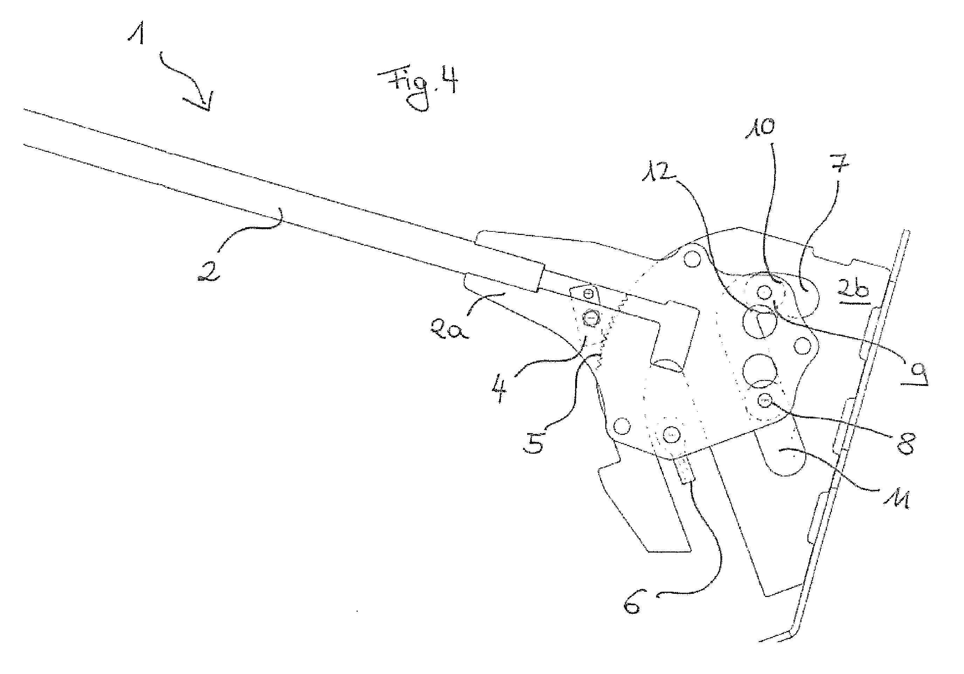

In figure 4, ball caster 9 is moving within the curved portion 10 of guidance track 7. The plates 2a and lever 2 are rotating about ball caster 8 and the ratio of the force applied by the driver on the lever to the force applied to cable is now 7.3. The force applied to the brake cables is therefore high and ensures the brakes come together. The high ratio ensures that there is good control of the brake discs since large movements of the lever result in small movements of the brake actuation. This makes the brake lever more sensitive which is important as the park brake can also be used in emergencies. In figure 4, the brake discs are now in contact and the park brake is on full.

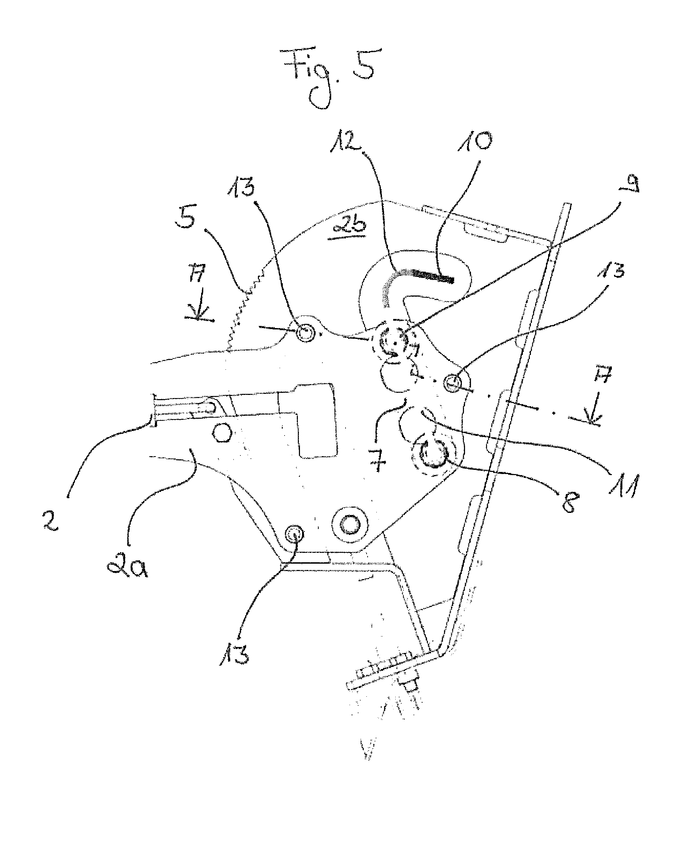

Figure 5 is a partial side view of the drawings of figures 1 to 4 showing movement of ball casters 8, 9 along guidance track 7 as lever 2 is raised. Flange bushes 13 are explained in figure 7. When ball casters 8, 9 are moving within the linear portion 11, the ratio of the force applied by the driver on the lever 2 to the force applied to the cable is 1. As ball caster 9 moves into the area 12 between the linear portion 11 and curved portion 10 the ratio of the force applied by the driver on the lever to the force applied to the cable is between 1 and 7.3. The larger the radius of area 12, the smoother the change in ratio is. The smaller the radius of area 12, the less smooth the change in ratio is. As ball caster 9 moves into curved portion 10, the ratio of the force applied by the driver on the lever 2 to the force applied to the cable is 7.3.

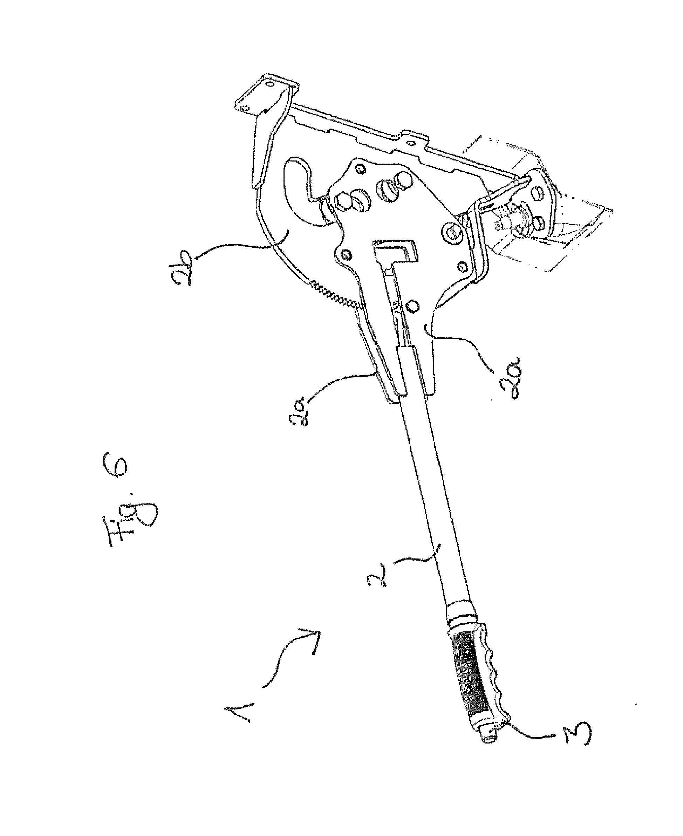

Figure 6 is a perspective view of the park brake in accordance with the invention.

Figure 7 is a section view along line A-A of figure 5 showing the detailed function of flange bushes 13. The flange bushes are mounted on movement plates 2a to guide the movement plates 2a on mounting block 2b during pivotal movement. A force applied transverse to the pivot plane is supported and the ball casters 8, 9 do not cant within the guidance track 7.

It is clearly shown that the flange bushes are mounted on opposing sides of movement plates 2a. Through the flange bushes 13 the lever 2 is guided, which means the lever 2 cannot move back and forth laterally. Ball caster 8, 9 can freely pivot between both movement plates 2a.

The embodiment described above shows a park brake lever assembly. It is envisaged that any other lever means for manual operation may be designed according to the invention. For example, the lever could operate a clutch, or a variety of other cable controlled mechanisms.

In the embodiment shown, ball casters are used as guidance means. It is possible that slide bushes could be used instead.

Furthermore, the actuation cable may be replaced by an actuation push rod, for example, if the driver's cab is not suspended.

The lever ratio could be changed by changing the radius of the curved portion 10 of guidance track 7, and/or the distance between the ball caster 8, 9, and/or the position of the guidance track 7 in relation to the pivot axle and/or actuation cable fixation point. It is obvious that the linear portion 11 of guidance track 7 could be slightly curved but produce the same effect.

## Claims

1. A lever arrangement (1) for use on an agricultural machine, said lever arrangement comprising a movement plate (2a) connectable to an actuation means, the movement plate provided with guidance means (8, 9) for movement within a guidance track (7) and said plate moveable by means of a lever (2), wherein movement of the lever in one plane results in a first movement of the plate followed by a second movement of the plate, said first movement being a linear, or rotational movement of the plate and said second movement being a rotational, or linear movement of the plate different from the first movement.

2. A lever arrangement as claimed in claim 1 wherein the lever is manually operable.

3. A lever arrangement as claimed in claim 1 or claim 2 wherein upwards movement of the lever in one plane results in linear movement of the plate followed by a rotational movement of the plate

4. A lever arrangement as claimed in claim I or claim 2 wherein downwards movement of the lever in one plane results in rotational movement of the plate followed by linear movement of the plate.

5. A lever arrangement as claimed in any preceding claim wherein the guidance track comprises a linear portion and a curved portion.

6. A lever arrangement as claimed in claim 5 wherein a ratio of force applied to the lever to the force applied to the actuation means is varied as the guidance means moves between the linear and curved portions of the guidance track.

7. A lever arrangement as claimed in claim 6 wherein the ratio of force applied to the lever to the force applied to the actuation means is 1 when the guidance means moves within the linear portion of the guidance track.

8. A lever arrangement as claimed in claim 7 wherein the ratio of force applied to the lever to the force applied to the actuation means is 7.3 when the guidance means moves within the curved portion of the guidance track.

9. A lever arrangement as claimed in any preceding claim wherein the actuation means is a brake cable.

10. A park brake on an agricultural tractor comprising the lever arrangement as claimed in any preceding claim.

## Patentansprüche

1. Hebelanordnung (1) für eine landwirtschaftliche Maschine, wobei die Hebelanordnung eine Bewegungsplatte (2a) besitzt, die mit einem Betätigungsmittel verbindbar ist, die Bewegungsplatte mit mindestens einem Führungsmittel (8, 9) zur Bewegung innerhalb einer Führungsbahn (7) ausgestattet ist und die Bewegungsplatte durch einen Hebel (2) bewegbar ist, wobei die Bewegung des Hebels in einer Ebene eine erste Bewegung der Bewegungsplatte zur Folge hat, auf die eine zweite Bewegung der Bewegungsplatte folgt, wobei die erste Bewegung eine lineare oder rotatorische Bewegung der Bewegungsplatte ist und die zweite Bewegung eine rotatorische oder lineare Bewegung der Bewegungsplatte ist, die von der ersten Bewegung abweicht.

2. Hebelanordnung nach Anspruch 1, wobei der Hebel manuell betätigbar ist.

3. Hebelanordnung nach Anspruch 1 oder 2, wobei eine Bewegung des Hebels in einer Ebene nach oben eine lineare Bewegung der Bewegungsplatte zur Folge hat, auf die eine rotatorische Bewegung der Bewegungsplatte folgt.

4. Hebelanordnung nach Anspruch 1 oder 2, wobei eine Bewegung des Hebels in einer Ebene nach unten eine rotatorische Bewegung der Bewegungsplatte zur Folge hat, auf die eine lineare Bewegung der Bewegungsplatte folgt.

5. Hebelanordnung nach einem der vorhergehenden Ansprüche, wobei die Führungsbahn einen linearen Bereich und einen kurvenförmigen Bereich aufweist.

6. Hebelanordnung nach Anspruch 5, wobei sich ein Verhältnis einer Kraft, die auf den Hebel aufgebracht wird, zu der Kraft, die auf das Betätigungsmittel aufgebracht wird, mit Bewegung des mindestens einen Führungsmittels entlang des linearen und kurvenförmigen Bereichs der Führungsbahn verändert.

7. Hebelanordnung nach Anspruch 6, wobei das Verhältnis der Kraft, die auf den Hebel aufgebracht wird, zu der Kraft, die auf das Betätigungsmittel aufgebracht wird, 1 ist, wenn sich das mindestens eine Führungsmittel in dem linearen Bereich der Führungsbahn bewegt.

8. Hebelanordnung nach Anspruch 7, wobei das Verhältnis der Kraft, die auf den Hebel aufgebracht wird, zu der Kraft, die auf oder durch das mindestens eine Betätigungsmittel aufgebracht wird, 7.3 ist, wenn sich das mindestens eine Führungsmittel in dem kurvenförmigen Bereich der Führungsbahn bewegt.

9. Hebelanordnung nach einem der vorhergehenden Ansprüche, wobei das Betätigungsmittel ein Bremskabel ist.

10. Parkbremse eines landwirtschaftlichen Zugfahrzeugs oder Traktors mit einer Hebelanordnung nach einem der vorhergehenden Ansprüche.

## Revendications

1. Agencement de levier (1) destiné à une utilisation sur une machine agricole, ledit agencement de levier comprenant une plaque de mouvement (2a) pouvant être raccordée à un moyen d'activation, la plaque de mouvement comportant un moyen de guidage (8, 9) destiné à assurer un mouvement à l'intérieur d'une piste de guidage (7) et ladite la plaque pouvant être déplacée au moyen d'un levier (2),
dans lequel le mouvement du levier dans un plan conduit à un premier mouvement de la plaque suivi par un second mouvement de la plaque, ledit premier mouvement étant un mouvement linéaire ou de rotation de la plaque et ledit second mouvement étant un mouvement de rotation ou linéaire de la plaque, différent du premier mouvement.

2. Agencement de levier selon la revendication 1, dans lequel le levier peut être commandé manuellement.

3. Agencement de levier selon la revendication 1 ou 2, dans lequel le mouvement vers le haut du levier dans un plan conduit à un mouvement linéaire de la plaque suivi par un mouvement de rotation de la plaque.

4. Agencement de levier selon la revendication 1 ou 2, dans lequel le mouvement vers le bas du levier dans un plan conduit à un mouvement de rotation de la plaque suivi par un mouvement linéaire de la plaque.

5. Agencement de levier selon l'une quelconque des revendications précédentes, dans lequel la piste de guidage comprend une partie linéaire et une partie courbe.

6. Agencement de levier selon la revendication 5, dans lequel un rapport de l'effort appliqué sur le levier à l'effort appliqué sur le moyen d'activation varie à mesure que le moyen de guidage se déplace entre les parties linéaire et courbe de la piste de guidage.

7. Agencement de levier selon la revendication 6, dans lequel le rapport de l'effort appliqué sur le levier à l'effort appliqué sur le moyen d'activation est égal à 1 lorsque le moyen de guidage se déplace à l'intérieur de la partie linéaire de la piste de guidage.

8. Agencement de levier selon la revendication 7, dans lequel le rapport de l'effort appliqué sur le levier à l'effort appliqué sur le moyen d'activation est égal à 7,3 lorsque le moyen de guidage se déplace à l'intérieur de la partie courbe de la piste de guidage.

9. Agencement de levier selon l'une quelconque des revendications précédentes, dans lequel le moyen d'activation est un câble de frein.

10. Frein de stationnement sur un tracteur agricole comprenant l'agencement de levier selon l'une quelconque des revendications précédentes.
